# DEMANDE DE BREVET EUROPEEN

(11) **EP 4 001 453 A1**
(43) Date de publication de la demande: **25.05.2022**
(21) Numéro de dépôt: 20208605.4
(22) Date de dépôt: 19.11.2020
(51) Int. Cl.: C23C 8/02, C23C 8/20, C23C 8/24, C23C 8/36, C23C 8/80, C23C 28/00, C25D 5/12, C25D 5/34, C25D 5/54, C25D 7/00, G04B 37/22

(54) **PROCEDE DE DEPOT D'UNE COUCHE METALLIQUE DECORATIVE ET/OU FONCTIONNELLE SUR UNE SURFACE D'UN ARTICLE REALISE EN UN MATERIAU CERAMIQUE ELECTRIQUEMENT NON-CONDUCTEUR**

(71) Demandeur: The Swatch Group Research and Development Ltd, 2074 Marin (CH)
(72) Inventeur: CURCHOD, Loïc, 1004 Lausanne (CH); VUILLE, Pierry, 2338 Les Emibois (CH)
(74) Mandataire: ICB SA

(57) **Abrégé**

L'invention concerne un procédé de dépôt d'une couche décorative et/ou fonctionnelle sur au moins une partie d'une surface d'un article fini ou semi-fini réalisé en un matériau céramique non-conducteur, ce procédé de dépôt comprenant les opérations suivantes :
-soumettre la au moins une partie de la surface de l'article à un traitement de carburation ou de nitruration au cours duquel des atomes de carbone, respectivement d'azote, diffusent dans la au moins une partie de la surface de l'article, puis
- déposer, par croissance galvanique d'un matériau métallique, la couche décorative et/ou fonctionnelle sur la au moins une partie de la surface de l'article qui a subi le traitement de carburation ou de nitruration.

## Description

### Domaine technique de l'invention

La présente invention concerne un procédé de dépôt par croissance galvanique d'une couche métallique décorative et/ou fonctionnelle sur au moins une partie de la surface d'un article fini ou semi-fini réalisé en un matériau céramique initialement électriquement non-conducteur.

### Arrière-plan technologique de l'invention

Une technique couramment utilisée à l'heure actuelle pour déposer par croissance galvanique une couche décorative et/ou fonctionnelle sur un article fini ou semi-fini réalisé en un matériau électriquement non-conducteur tel que de la céramique consiste à déposer en premier lieu sur au moins une partie de la surface de cet article une couche d'accroché suivie d'une couche de germination toutes deux conductrices de l'électricité. La couche d'accroché, typiquement réalisée par dépôt physique en phase vapeur - technique également connue sous sa dénomination anglo-saxonne Physical Vapor Déposition ou PVD - peut être par exemple réalisée à base de chrome. Après dépôt de la couche d'accroché, on dépose une couche de germination. Cette couche de germination, déposée à l'aide de la même technique que la couche d'accroché ou d'une technique similaire, est préférentiellement réalisée à l'aide du même matériau, par exemple de l'or, que celui qui sera utilisé pour faire croître la couche décorative ou fonctionnelle. Après dépôt de la couche de germination, on met à profit la bonne conductivité électrique des couches de chrome et d'or pour faire croître par croissance galvanique en couche épaisse la couche décorative ou fonctionnelle sur la surface de l'article.

Un procédé du type brièvement décrit ci-dessus est utilisé par exemple pour la production de lunettes de montres-bracelets réalisées en zircone ZrO₂ sur lesquelles on vient structurer des inserts en or ou en un autre alliage de métal précieux. A cette fin, des creusures de la forme souhaitée sont préalablement usinées sur la lunette. Les dépôts PVD de couches minces de chrome (accroche) et d'or (germination) sont ensuite effectués sur toute la surface de la lunette, y compris dans les creusures, puis l'on vient faire croître par galvanoplastie une couche épaisse du matériau désiré, typiquement un alliage à base d'or, sur la couche de germination. Finalement, la surface de la lunette est reprise et polie mécaniquement afin d'ôter le surplus de métal précieux et de ne laisser subsister celui-ci que dans les creusures.

La technique ci-dessus permet avantageusement de déposer des couches fonctionnelles ou décoratives sur des articles finis ou semi-finis réalisés en des matériaux électriquement non-conducteurs tels que des céramiques. Cette technique n'est cependant pas exempte de tout problème ; en effet, il arrive que l'on soit confronté à des problèmes de délamination aussi bien de la couche de chrome sur la zircone que de la couche d'or sur la couche de chrome, ce qui conduit à devoir mettre les articles affectés par ce type de problème au rebut. De même, le dépôt physique en phase vapeur qui est une technique de dépôt assez directionnelle ne permet pas toujours de garantir que les couches minces vont parfaitement épouser le contour de structures de petites dimensions telles que des creusures usinées dans une lunette d'une montre-bracelet. Enfin, comme il est nécessaire, dans le cas décrit ici, de déposer deux matériaux d'accroché de natures différentes (par exemple le chrome pour la couche d'accroché et l'or pour la couche de germination), il faut disposer d'un équipement muni d'au moins 2 cathodes pour les 2 différents matériaux. Or, un tel équipement est coûteux. Dans le cas où l'on ne dispose pas d'une telle installation, il est toujours possible de déposer la première couche d'accroché, puis de rompre le vide pour pouvoir remplacer la cible de chrome par une cible en or avant d'effectuer le second dépôt. Une telle opération est cependant longue et donc coûteuse et son succès n'est pas garanti malgré les précautions prises, de sorte que si le premier dépôt est pollué et/ou contaminé lorsque l'article est remis au contact de l'air pendant le changement de cible, cela peut conduire à des problèmes de délamination de la seconde couche mince sur la première couche mince.

Pour tenter de résoudre ces problèmes, il a déjà été proposé de soumettre une partie au moins de la surface d'un article en céramique fini ou semi-fini à une réaction de réduction afin de l'appauvrir significativement en oxygène sur une profondeur prédéterminée et de la rendre électriquement conductrice. La réaction de réduction est réalisée par exemple au moyen d'un plasma formé par ionisation d'un mélange d'hydrogène et d'un gaz neutre. En fonction de la durée du traitement plasma, la couche superficielle de céramique significativement réduite s'étend à partir de la surface de l'article sur une profondeur comprise entre 20 nm et 10 µm. Cette étape de réduction permet donc de créer, depuis la surface de l'article vers le cœur de celui-ci, une couche superficielle qui présente une sous-stœchiométrie en oxygène de la céramique.

L'appauvrissement en oxygène de la couche superficielle permet de rendre cette dernière électriquement conductrice. Par conséquent, après cette étape de réduction, on peut procéder au dépôt par galvanoplastie d'une couche d'un matériau métallique sur les parties de la surface de l'article en céramique rendues électriquement conductrices pour former des motifs décoratifs et/ou fonctionnels.

Le procédé brièvement décrit ci-dessus permet de déposer sur au moins une partie de la surface d'un article réalisé en un matériau initialement électriquement non-conducteur des couches métalliques décoratives et/ou fonctionnelles en faisant l'économie du dépôt physique en phase vapeur des couches d'accroché et de germination habituelles. On s'affranchit ainsi des risques récurrents de délaminage des couches déposées par les techniques PVD. Néanmoins, on s'est rendu compte que pour rendre l'article en céramique suffisamment électriquement conducteur pour permettre le dépôt de couches métalliques décoratives et/ou fonctionnelles de qualité, il fallait réduire la céramique très fortement, ce qui ne va pas sans poser des problèmes. En effet, dans beaucoup de domaines tels que l'horlogerie et la bijouterie, on utilise la zircone stabilisée en phase tétragonale t-ZrO₂ à température ambiante par l'ajout de 3% mole d'oxyde d'yttrium ou yttria Y₂O₃, notamment pour sa haute ténacité. Or, une forte réduction de la zircone tétragonale provoque une transition de la phase tétragonale vers une phase cubique ou monoclinique qui est significativement moins tenace. De plus, les atomes d'oxygène présents dans la céramique étant très mobiles, une réduction partielle de la céramique s'opère dans une grande partie du volume de l'article en céramique, parfois jusqu'à son cœur, et pas seulement dans ses couches superficielles, ce qui fragilise considérablement l'article.

### Résumé de l'invention

La présente invention a pour but de remédier aux problèmes mentionnés ci-dessus ainsi qu'à d'autres encore en proposant un procédé de dépôt par croissance galvanique d'une couche décorative et/ou fonctionnelle sur une partie au moins d'une surface d'un article réalisé en un matériau initialement non-conducteur de l'électricité qui permet notamment de s'affranchir du dépôt de couches rapportées sur la surface de l'article et qui ne fragilise pas cet article.

A cet effet, la présente invention concerne un procédé de dépôt d'une couche décorative et/ou fonctionnelle sur au moins une partie d'une surface d'un article fini ou semi-fini réalisé en un matériau céramique électriquement non-conducteur, ce procédé de dépôt comprenant les opérations suivantes :
- soumettre la au moins une partie de la surface de l'article à un traitement de carburation ou de nitruration au cours duquel des atomes de carbone, respectivement d'azote, diffusent dans la au moins une partie de la surface de l'article, puis
- déposer, par croissance galvanique d'un matériau métallique, la couche décorative et/ou fonctionnelle sur la au moins une partie de la surface de l'article qui a subi le traitement de carburation ou de nitruration.

Selon une forme particulière d'exécution de l'invention, l'article est réalisé en zircone ZrO₂.

Selon une autre forme particulière d'exécution de l'invention, la zircone est stabilisée dans sa phase tétragonale t-ZrO₂.

Selon encore une autre forme particulière d'exécution de l'invention, la zircone est stabilisée dans sa phase tétragonale à température ambiante par ajout de 3% molaire d'oxyde d'yttrium Y₂O₃ à la composition de la zircone.

Selon encore une autre forme particulière d'exécution de l'invention, on soumet au moins la partie de la surface de l'article fini ou semi-fini à un traitement préalable de réduction au cours duquel un appauvrissement en oxygène s'opère depuis la surface de l'article fini ou semi-fini vers le cœur de celui-ci.

Selon encore une autre forme particulière d'exécution de l'invention, le procédé de traitement de surface de l'article est mis en oeuvre dans un réacteur à plasma ou dans un réacteur à filaments chauds.

Selon encore une autre forme particulière d'exécution de l'invention, lorsque l'article est soumis à un traitement de carburation par plasma, on introduit celui-ci dans un réacteur dans lequel on génère un plasma obtenu à partir de l'ionisation d'un mélange d'hydrogène, d'un gaz neutre et de traces de carbone afin de créer une atmosphère réactive constituée d'atomes d'hydrogène et d'atomes de carbone.

Selon encore une autre forme particulière d'exécution de l'invention, les traces de carbone utilisées pour former le plasma sont obtenues à partir d'un hydrocarbure ou d'un mélange de tels hydrocarbures.

Selon encore une autre forme particulière d'exécution de l'invention, le ou les hydrocarbures sont choisis dans le groupe formé par l'éthane, le méthane et l'acétylène.

Selon encore une autre forme particulière d'exécution de l'invention, lorsque l'article est soumis à un traitement de nitruration par plasma, on introduit celui-ci dans un réacteur dans lequel on génère un plasma obtenu à partir de l'ionisation d'un mélange d'hydrogène, d'un gaz neutre et de traces d'azote afin de créer une atmosphère réactive constituée d'atomes d'hydrogène et d'atomes d'azote.

Selon encore une autre forme particulière d'exécution de l'invention, les traces d'azote utilisées pour former le plasma sont obtenues à partir d'azote gazeux N₂ ou d'ammoniac NH₃.

Selon encore une autre forme particulière d'exécution de l'invention, le gaz neutre est de l'argon.

Selon encore une autre forme particulière d'exécution de l'invention, l'article est maintenu dans l'atmosphère réactive créée par le plasma pendant une durée comprise entre 15 et 240 minutes et de préférence égale à 150 minutes.

Selon encore une autre forme particulière d'exécution de l'invention, la température moyenne de l'article au cours du traitement par plasma varie entre 500°C et 1'300°C.

Selon encore une autre forme particulière d'exécution de l'invention, la diffusion d'atomes de carbone ou d'azote crée des cristallites de carbure de zirconium ZrC, respectivement de nitrure de zirconium ZrN, jusqu'à une profondeur de 1 micromètre depuis la surface de l'article.

Selon encore une autre forme particulière d'exécution de l'invention, la résistance électrique de surface de l'article après traitement de carburation ou de nitruration est inférieure à 10 Ω/□.

Selon encore une autre forme particulière d'exécution de l'invention, le matériau métallique pour la croissance galvanique est choisi dans le groupe formé par l'or, l'argent, le cuivre, le platine, l'indium, le palladium, le rhodium, les bronzes blanc et jaune, le nickel ainsi que les alliages de ces métaux.

Grâce à ces caractéristiques, la présente invention procure un procédé permettant de déposer par galvanoplastie une couche métallique décorative et/ou fonctionnelle sur un article réalisé en un matériau céramique initialement électriquement non-conducteur. L'avantage de ce procédé réside notamment dans le fait qu'il fait intervenir des phénomènes intrinsèques de transformation de la matière permettant de s'affranchir des opérations conventionnelles de dépôts de couches d'accroché et de germination et donc de s'affranchir des problèmes de délamination inhérents à ces techniques de dépôts de couches. De plus, le traitement de carburation ou de nitruration s'applique naturellement au même taux à toute la surface de l'article exposée à l'atmosphère du réacteur et est ainsi plus conforme et homogène que les dépôts physiques en phase vapeur des couches d'accroché et de germination de l'art antérieur qui sont directifs. En enseignant de soumettre un article réalisé en un matériau céramique électriquement non-conducteur tel que de la zircone à un traitement de nitruration ou de carburation, la présente invention permet de créer à la surface de l'article ainsi traité une couche superficielle présentant une conductivité électrique supérieure à celle qui est obtenue en soumettant un tel article uniquement à un traitement de réduction partielle. En effet, la diffusion des atomes de carbone ou d'azote dans la couche superficielle de l'article aux endroits laissés vacants par les atomes d'oxygène crée des cristallites de carbure de zirconium ZrC, respectivement de nitrure de zirconium ZrN, beaucoup plus conducteurs que la simple zircone réduite ZrO₂₋ₓ. Ainsi, même si les opérations de carburation ou de nitruration impliquent obligatoirement une réduction partielle de la zircone dans tout son volume, l'intensité de cette réduction et donc le risque de fragilisation y relatif peuvent être maintenus à un niveau relativement faible par rapport à celui du traitement de réduction pure de l'art antérieur, tout en conférant à la couche superficielle de l'article une excellente conductivité électrique. L'invention propose donc un procédé à la fois plus efficace pour rendre la surface de l'article électriquement conductrice, et moins défavorable en ce qui concerne la tenue mécanique de cet article.

### Description détaillée d'un mode de réalisation de l'invention

La présente invention procède de l'idée générale inventive qui consiste à soumettre un article en céramique électriquement non-conducteur ayant préalablement fait l'objet d'un traitement de carburation ou de nitruration à un dépôt, par croissance galvanique, d'une couche métallique à fonction décorative et/ou fonctionnelle. La présente invention met ainsi avantageusement à profit le fait que le traitement de carburation ou de nitruration de la pièce en céramique rend celle-ci électriquement conductrice en surface pour pouvoir déposer une couche métallique par galvanoplastie. Grâce à l'invention, on peut ainsi notamment s'affranchir des techniques de dépôts physiques en phase vapeur des couches d'accroché et de germination de l'art antérieur et des problèmes qui accompagnent fréquemment ces techniques, à savoir les risques de délamination et mauvaise résistance à l'abrasion des couches déposées. On notera aussi qu'un traitement de carburation ou de nitruration permet de rendre une pièce en un matériau céramique initialement électriquement non-conducteur meilleur conducteur électrique qu'un simple traitement de réduction. De plus, un traitement de carburation ou de nitruration fragilise moins la pièce en céramique que le traitement de réduction pure nécessaire pour obtenir une conductivité électrique équivalente. Enfin, les techniques utilisées pour les traitements de carburation ou de nitruration, à savoir plasma ou filament(s) chaud(s), sont de type diffusif et non directif comme le PVD. Par conséquent, il est plus aisé de traiter par exemple des creusures ou des trous traversants avec cette technique non-directionnelle qu'avec une technique directionnelle comme le PVD.

A titre d'exemple illustratif et non limitatif, on se munit d'un objet de départ formé par un article en zircone ayant une configuration cristallographique tétragonale (oxyde de zirconium t-ZrO₂) qui est réalisé selon les techniques usuelles de fabrication d'articles en céramique, par exemple par injection et frittage.

Cet article peut être un produit fini ayant la forme et l'état de surface finaux dans lesquels il va être utilisé, par exemple une pièce de forme généralement parallélépipédique ayant déjà subi un polissage et destinée à constituer un élément d'habillage d'une pièce d'horlogerie, par exemple un maillon de bracelet.

Bien entendu, l'article peut aussi être un produit semi-fini sur lequel des opérations d'usinage ultérieures seront réalisées afin d'adapter cet article à son utilisation finale.

On notera que la zircone dans laquelle est réalisé l'article est préférentiellement stabilisée dans sa phase tétragonale à température ambiante par ajout de 3% molaire d'oxyde d'yttrium ou yttria Y₂O₃.

L'article est ensuite soumis à un traitement de carburation par plasma. A cet effet, l'article est introduit dans un réacteur dans lequel on fait un vide au moins partiel au moyen d'un système de pompage, avant de générer un plasma obtenu à partir de l'ionisation d'un mélange d'hydrogène, d'un gaz neutre et de traces de carbone. Ce plasma est obtenu par exemple à l'aide d'une décharge électrique de courant continu. Bien entendu, d'autres moyens tels que les ondes radiofréquences (RF) ou micro-ondes peuvent être envisagés pour engendrer le plasma.

Selon la méthode utilisée pour obtenir le plasma, l'utilisation de l'argon comme gaz neutre est avantageuse. L'utilisation du néon est également envisageable.

Les traces de carbone utilisées pour former le plasma peuvent être obtenues à partir d'hydrocarbures tels que le méthane, l'acétylène, l'éthane ou un mélange de ces derniers. On veillera toutefois à ce qu'au cours du procédé, les concentrations relatives des différents constituants du plasma soient telles qu'il n'y ait pas formation de dépôts carbonés à la surface de l'article.

L'article est maintenu dans l'atmosphère réactive créée par le plasma pendant une durée comprise entre 15 et 240 minutes et de préférence égale à 150 minute. En ajustant les paramètres de mise en œuvre du procédé (puissance délivrée au plasma, durée du traitement, composition du mélange gazeux, débits, etc.), la température moyenne de l'article s'établit entre 600°C et 1300°C. Des moyens de chauffage auxiliaires peuvent aussi être utilisés à cet effet.

Sous l'action de l'atmosphère réactive et de la température, l'article en zircone se réduit partiellement et les atomes de carbone diffusent depuis sa surface vers son cœur, jusqu'à former une couche superficielle de cristallites de carbure de zirconium ZrC.

Après carburation par plasma, l'article présente l'éclat métallique et la conductivité électrique non-nulle caractéristiques du carbure de zirconium, tout en conservant une grande dureté superficielle et une haute ténacité qui lui permettent de résister à l'usure dans des conditions normales d'utilisation.

Un des attraits essentiels du procédé de carburation par plasma brièvement décrit ci-dessus réside dans le fait que l'article en zircone se transforme sur une épaisseur relativement faible, de l'ordre de 10 à 1'000 nm, la zircone (oxyde de zirconium) dans la région extérieure étant transformée en carbure de zirconium ayant des propriétés métalliques. De préférence, le procédé de carburation par plasma est ajusté de façon que la couche superficielle de carbure de zirconium s'étende à partir de la surface de l'article sur une profondeur comprise entre 20 et 200 nm.

Il s'agit donc d'une modification superficielle de la structure de la zircone en une nouvelle structure cristallographique correspondant à celle du carbure de zirconium, qui n'affecte que peu les propriétés mécaniques de l'article. De plus, il ne s'agit pas non plus d'un revêtement rapporté susceptible d'être arraché ou de se désolidariser de la surface de l'article, notamment lorsque celui-ci est soumis à des conditions d'usure importantes.

La région de transition qui s'étend depuis la couche superficielle de carbure de zirconium jusqu'au cœur de l'article comprend du carbure de zirconium sous-stœchiométrique du type ZrCi-y dont la teneur en carbone diminue graduellement à mesure que l'on progresse vers le cœur de l'article. Autrement dit, la sous-stœchiométrie du carbure de zirconium augmente au fur et à mesure que l'on se rapproche du cœur de l'article, tandis qu'apparaît progressivement, à partir d'une certaine profondeur, une quantité grandissante d'oxygène sous la forme d'oxycarbure de zirconium ZrO₂₋ₓC_{1-y}.

On atteint ensuite le cœur de l'article qui est constitué de zircone partiellement réduite du type ZrO₂₋ₓ et de zircone en phase tétragonale t-ZrO₂.

Selon une autre forme d'exécution de l'invention, l'article fini ou semi-fini en zircone tétragonale est soumis à un traitement de nitruration par plasma. À cet effet, l'article est introduit dans un réacteur dans lequel on fait un vide au moins partiel au moyen d'un système de pompage, avant de générer un plasma obtenu à partir de l'ionisation d'un mélange d'hydrogène, d'un gaz neutre et de traces d'azote. Ce plasma est obtenu par exemple à l'aide d'une décharge électrique de courant continu. Bien entendu, d'autres moyens tels que les ondes radiofréquences (RF) ou micro-ondes peuvent être envisagés pour engendrer le plasma.

Selon la méthode utilisée pour obtenir le plasma, l'utilisation d'un gaz neutre tel que de l'argon est avantageuse. L'utilisation du néon est également envisageable. Quant aux traces d'azote utilisées pour former le plasma, elles peuvent être obtenues à partir d'azote gazeux N₂ ou d'ammoniac NH₃.

L'article est maintenu dans l'atmosphère réactive créée par le plasma pendant une durée comprise entre 15 et 240 minutes et de préférence égale à 150 minutes, en ajustant les paramètres de mise en œuvre du procédé (puissance délivrée au plasma, durée du traitement, composition du mélange gazeux, débits, etc.) pour que la température moyenne de l'article s'établisse entre 500 et 900°C. Des moyens de chauffage auxiliaires peuvent aussi être utilisés à cet effet.

Sous l'action de l'atmosphère réactive et de la température, l'article en zircone se réduit partiellement et les atomes d'azote diffusent dans sa surface vers son cœur, jusqu'à former une couche superficielle de cristallites de nitrure de zirconium ZrN.

Après nitruration par plasma, l'article présente un aspect extérieur métallique doré et une conductivité électrique non-nulle caractéristiques du nitrure de zirconium ZrN, tout en conservant une grande dureté superficielle et une haute ténacité qui lui permettent de résister à l'usure dans des conditions normales d'utilisation.

Comme dans le cas du procédé de carburation par plasma, un des attraits essentiels du procédé de nitruration par plasma brièvement décrit ci-dessus réside dans le fait que l'article en zircone se transforme sur une épaisseur relativement faible, de l'ordre de 10 à 1000 nm, la zircone (oxyde de zirconium) dans la région extérieure étant transformée en nitrure de zirconium ayant des propriétés métalliques. De préférence, le procédé de nitruration par plasma est ajusté de façon que la couche superficielle de nitrure de zirconium s'étende à partir de la surface de l'article sur une profondeur comprise entre 20 et 200 nm.

Comme dans le cas du procédé de carburation par plasma, le traitement de nitruration par plasma génère un gradient stœchiométrique entre le nitrure de zirconium ZrN superficiel et la zircone tétragonale t-ZrO₂ au cœur de la pièce. La couche superficielle de nitrure de zirconium ZrN ne constitue pas un revêtement rapporté qui serait susceptible d'être arraché ou de se désolidariser de la surface de l'article, notamment lorsque ce dernier est soumis à des conditions d'usure importantes.

Selon une autre forme d'exécution de l'invention, l'article fini ou semi-fini à base de zircone est soumis à un traitement de carburation effectué dans un réacteur du type à filaments chauds. A cet effet, on se munit d'un article à l'état fini ou semi-fini en zircone préférentiellement stabilisée en phase tétragonale par ajout de 3% molaire d'oxyde d'yttrium ou yttria Y₂O₃. L'article est introduit dans un réacteur dans lequel on crée un vide au moins partiel à l'aide d'un système de pompage, avant de créer une atmosphère réactive d'atomes de carbone et d'hydrogène à partir d'un mélange d'hydrogène et de traces d'un hydrocarbure, comme du méthane. Pour ce faire, l'article et les gaz enfermés dans le réacteur sont chauffés au moyen d'au moins un élément résistif, par exemple un filament réalisé en métal réfractaire. Le ou les filaments sont parcourus par un courant électrique qui provoque leur échauffement par effet Joule. De préférence, on fait en sorte que la température de ces filaments atteigne au moins 1500°C. Les filaments ainsi chauffés à blanc chauffent l'article et les gaz par rayonnement jusqu'à obtenir une dissociation de l'hydrogène et de l'hydrocarbure, ce qui conduit à une atmosphère réactive d'atomes d'hydrogène et de carbone. La réaction de réduction-carburation de l'article en zircone a ensuite lieu selon les mêmes mécanismes de diffusion que dans le procédé de carburation par plasma.

De même, dans le cas d'un traitement de nitruration dans un réacteur à filaments chauds, on se munit d'un article à l'état fini ou semi-fini en zircone préférentiellement stabilisée en phase tétragonale par ajout de 3% molaire d'oxyde d'yttrium ou yttria Y₂O₃. L'article est introduit dans un réacteur dans lequel on crée un vide au moins partiel à l'aide d'un système de pompage, avant de créer une atmosphère réactive d'atomes d'azote et d'hydrogène à partir d'un mélange d'hydrogène et de traces d'azote gazeux N₂ ou d'ammoniac NH₃. Pour ce faire, l'article et les gaz enfermés dans le réacteur sont chauffés au moyen d'au moins un élément résistif, par exemple un filament réalisé en métal réfractaire. Le ou les filaments sont parcourus par un courant électrique qui provoque leur échauffement par effet Joule. De préférence, on fait en sorte que la température de ces filaments atteigne au moins 1500°C. Les filaments ainsi chauffés à blanc vont chauffer l'article et les gaz par rayonnement jusqu'à obtenir une dissociation de l'hydrogène et de l'azote gazeux ou de l'ammoniac, permettant ainsi l'obtention d'une atmosphère réactive d'atomes d'hydrogène et d'azote. La réaction de réduction-nitruration de l'article en zircone a ensuite lieu selon les mêmes mécanismes de diffusion que dans le procédé de nitruration par plasma.

Quel que soit le cas considéré, à savoir nitruration ou carburation dans un réacteur à plasma ou dans un réacteur à filaments chauds, les atomes d'hydrogène présents dans l'atmosphère du réacteur vont participer au chauffage de l'article en se recombinant entre eux à la surface de la zircone. En effet, en se recombinant, les atomes d'hydrogène relarguent une partie de leur énergie vers l'article en zircone. Sous l'effet de la chaleur, une partie de l'oxygène contenu dans l'article diffuse vers sa surface et s'échappe de ce dernier. En ce qui concerne les atomes d'hydrogène qui ne se recombinent pas avec d'autres atomes d'hydrogène à la surface de l'article, ceux-ci se recombinent avec des atomes d'oxygène contenus dans la zircone et contribuent donc activement à la réduction de la zircone. Simultanément, les atomes de carbone ou d'azote diffusent de la surface vers le cœur de l'article et se substituent aux atomes d'oxygène qui se sont échappés de l'article. Cette diffusion dans l'article des atomes de carbone ou d'azote provoque l'apparition de la couche superficielle dans laquelle ces atomes se recombinent avec la zircone partiellement réduite pour former des cristallites de carbure de zirconium ou de nitrure de zirconium respectivement.

Selon un mode particulier de mise en œuvre du procédé selon l'invention, préalablement à l'étape de carburation ou de nitruration et de préférence dans le même réacteur afin de ne pas devoir rompre le vide, on soumet au moins la partie de la surface de l'article fini ou semi-fini à un traitement de réduction partielle au cours duquel un appauvrissement en oxygène s'opère depuis la surface de l'article fini ou semi-fini vers le cœur de celui-ci. L'étape de réduction préalable permet effectivement d'obtenir un gradient de réduction grâce auquel la couche de carbure de zirconium ZrC ou de nitrure de zirconium ZrN peut se former plus efficacement.

On notera que l'étape préalable de réduction de l'article conduite dans le réacteur à plasma ou à filaments chauds est réalisée en créant une atmosphère réactive par la dissociation d'hydrogène ou d'un mélange d'hydrogène et d'un gaz neutre. Cette étape préalable de réduction s'effectue pendant une durée comprise entre 0.5 et 2 heures et avec une température de l'article en zircone préférentiellement comprise entre 600°C et 1300°C.

Les procédés de carburation et de nitruration par plasma ou par filaments chauds demandent un temps de traitement relativement court, de l'ordre de 150 minutes, et conduisent à une meilleure reproductibilité que le procédé de réduction pure de l'art antérieur. Cela rend le procédé selon l'invention exploitable aisément de façon industrielle.

On notera qu'après traitement de carburation ou de nitruration, la résistance électrique de surface de l'article est typiquement inférieure à 10 Ω/□. L'unité Ω/□ est équivalente à la valeur ohmique des résistances électriques, mais caractérise spécifiquement la résistance électrique de surface des couches minces. Cette unité est définie comme le rapport entre la résistivité p exprimée en Ohm.m du matériau dans lequel est réalisée la couche mince et l'épaisseur de la couche mince exprimée en mètres, ce qui conduit à une unité exprimée en Ohms, mais que l'on note Ω/□ pour indiquer qu'il s'agit de la résistance électrique de surface d'une couche mince, et non de la résistance électrique d'un conducteur de géométrie conventionnelle.

Finalement, après traitement de carburation ou de nitruration effectué dans un réacteur à plasma ou dans un réacteur à filaments chauds, on met à profit la bonne conductivité électrique de surface de l'article en céramique ainsi obtenue pour déposer sur celui-ci une couche métallique par galvanoplastie.

A titre préféré mais non limitatif, le métal est choisi dans le groupe formé par l'or, l'argent, le cuivre, le platine, l'indium, le palladium, le rhodium, les bronzes blanc et jaune ainsi que le nickel, et par les alliages de ces métaux. Quant à la croissance galvanoplastique, celle-ci se fait conventionnellement par circulation d'un courant électrique entre une anode et une cathode dans un bain dans lequel sont dispersés un ou plusieurs catalyseurs ainsi que le métal que l'on souhaite déposer sur l'article en céramique. On notera que l'article en céramique est relié au pôle négatif du bain, c'est-à-dire à la cathode.

A titre préféré mais non limitatif, le métal déposé est un alliage d'or-cuivre (Au-Cu), le catalyseur est du cyanure de potassium et les paramètres de dépôt sont une température du bain comprise entre 68°C et 72°C et une densité de courant comprise entre 0.3 et 1.0 A/dm². Dans ces conditions, une vitesse de croissance typiquement comprise entre 10 et 20 microns/heure est observée. La densité de courant dicte le titre de l'alliage déposé (par exemple une densité de courant comprise entre 0.4-0.5 A/dm² permet de déposer de l'or 18 carats) et la vitesse de croissance résultante.

Un test de croissance galvanique a été effectué sur des cadrans et une lunette de montre réalisés en oxyde de zirconium stabilisé en phase tétragonale par ajout de 3% molaire d'yttria Y₂O₃. La lunette de montre comporte des heure-index creusés au moyen d'un laser. Toutes les pièces ont été carburées dans un réacteur à filaments chauds. La résistance électrique de surface des pièces ainsi carburées était inférieure à 10 Ω/□. Le test de croissance galvanique a été effectué dans un bain d'alliage Au-Cu et a permis de déposer une couche d'or 18 carats d'une épaisseur de 195 micromètres. L'expérience montre que, grâce au procédé de l'invention, les pièces en zircone se couvrent d'une couche d'or. Dans le cas particulier de la lunette, les heures-index sont remplis par de l'or 18 carats. Grâce à l'invention, on peut ainsi notamment s'affranchir des techniques de dépôts physiques en phase vapeur des couches d'accroché et de germination de l'art antérieur et des problèmes qui accompagnent fréquemment ces techniques, à savoir risques de délamination et mauvaise résistance à l'abrasion des couches déposées.

Il va de soi que la présente invention n'est pas limitée aux modes de réalisation qui viennent d'être décrits et que diverses modifications et variantes simples peuvent être envisagées par l'homme du métier sans sortir du cadre de l'invention tel que défini par les revendications annexées. On notera en particulier que la présente invention s'applique à la préparation d'articles réalisés en un matériau céramique initialement non-conducteur de l'électricité pour pièces d'horlogerie et de bijouterie tels que : carrures de montres, lunettes de montres, cadrans de montres, maillons de bracelets, ponts, platines ou masses oscillantes pour un mouvement horloger, bagues, boucles d'oreille et autres.

## Revendications

1. Procédé de dépôt d'une couche décorative et/ou fonctionnelle sur au moins une partie d'une surface d'un article fini ou semi-fini réalisé en un matériau céramique initialement non-conducteur de l'électricité, ce procédé de dépôt comprenant les opérations suivantes :
- soumettre la au moins une partie de la surface de l'article à un traitement de carburation ou de nitruration au cours duquel des atomes de carbone, respectivement d'azote, diffusent dans la au moins une partie de la surface de l'article, puis
- déposer, par croissance galvanique d'un matériau métallique, la couche décorative et/ou fonctionnelle sur la au moins une partie de la surface de l'article qui a subi le traitement de carburation ou de nitruration.

2. Procédé de dépôt d'une couche décorative et/ou fonctionnelle selon la revendication 1, **caractérisé en ce que** le traitement de carburation ou de nitruration est mis en œuvre dans un réacteur à plasma ou dans un réacteur à filaments chauds qui permettent de créer une atmosphère réactive.

3. Procédé de dépôt d'une couche décorative et/ou fonctionnelle selon la revendication 2, **caractérisé en ce que**, préalablement à l'étape de carburation ou de nitruration, on soumet au moins la partie de la surface de l'article fini ou semi-fini à un traitement de réduction au cours duquel un appauvrissement en oxygène s'opère depuis la surface de l'article fini ou semi-fini vers le cœur de celui-ci.

4. Procédé de dépôt d'une couche décorative et/ou fonctionnelle selon l'une des revendications 2 et 3, **caractérisé en ce que** lorsque l'article est soumis à un traitement de carburation par plasma, on introduit celui-ci dans un réacteur dans lequel on crée un vide au moins partiel avant de créer un plasma obtenu à partir de l'ionisation d'un mélange d'hydrogène, d'un gaz neutre et de traces de carbone.

5. Procédé de dépôt d'une couche décorative et/ou fonctionnelle selon la revendication 4, **caractérisé en ce que** les traces de carbone utilisées pour former le plasma sont obtenues à partir d'un hydrocarbure ou d'un mélange de tels hydrocarbures.

6. Procédé de dépôt d'une couche décorative et/ou fonctionnelle selon la revendication 5, **caractérisé en ce que** le ou les hydrocarbures sont choisis dans le groupe formé par l'éthane, le méthane et l'acétylène.

7. Procédé de dépôt d'une couche décorative et/ou fonctionnelle selon l'une des revendications 4 à 6, **caractérisé en ce que** le gaz neutre est de l'argon.

8. Procédé de dépôt d'une couche décorative et/ou fonctionnelle selon l'une des revendications 4 à 7, **caractérisé en ce que** l'article est maintenu dans l'atmosphère réactive créée par le plasma pendant une durée comprise entre 15 et 240 minutes et de préférence égale à 150 minutes.

9. Procédé de dépôt d'une couche décorative et/ou fonctionnelle selon l'une des revendications 4 à 8, **caractérisé en ce que** la température moyenne de l'article au cours du traitement de carburation par plasma varie entre 600 et 1'300°C.

10. Procédé de dépôt d'une couche décorative et/ou fonctionnelle selon l'une des revendications 2 et 3, **caractérisé en ce que** lorsque l'article est soumis à un traitement de nitruration par plasma, on introduit celui-ci dans un réacteur dans lequel on crée un vide au moins partiel avant de créer un plasma obtenu à partir de l'ionisation d'un mélange d'hydrogène, d'un gaz neutre et d'azote.

11. Procédé de dépôt d'une couche décorative et/ou fonctionnelle selon la revendication 10, **caractérisé en ce que** le gaz neutre est de l'argon ou du néon.

12. Procédé de dépôt d'une couche décorative et/ou fonctionnelle selon l'une des revendications 10 à 11, **caractérisé en ce que** l'article est maintenu dans l'atmosphère réactive créée par le plasma pendant une durée comprise entre 15 et 240 minutes et de préférence égale à 150 minutes.

13. Procédé de dépôt d'une couche décorative et/ou fonctionnelle selon l'une des revendications 10 à 12, **caractérisé en ce que** la température moyenne de l'article au cours du traitement de nitruration par plasma s'établit entre 500 et 900°C.

14. Procédé de dépôt d'une couche décorative et/ou fonctionnelle selon l'une des revendications 1 à 13, **caractérisé en ce que** le plasma est engendré à l'aide d'une décharge de courant continu, par des ondes radiofréquences (RF) ou par micro-ondes.

15. Procédé de dépôt d'une couche décorative et/ou fonctionnelle selon l'une des revendications 2 ou 3, **caractérisé en ce que**, lorsque l'article est soumis à un traitement de carburation ou de nitruration effectué dans un réacteur du type à filaments chauds, on crée dans celui-ci un vide au moins partiel avant de créer une atmosphère réactive de carbone atomique ou d'azote atomique qui, le cas échéant, peut être complétée par de l'hydrogène atomique.

16. Procédé de dépôt d'une couche décorative et/ou fonctionnelle selon la revendication 15, **caractérisé en ce que** la température du ou des filaments atteint au moins 1500°C.

17. Procédé de dépôt d'une couche décorative et/ou fonctionnelle selon la revendication 16, **caractérisé en ce que** le au moins un filament est réalisé en un matériau métallique réfractaire.

18. Procédé de dépôt d'une couche décorative et/ou fonctionnelle selon l'une des revendications 1 à 17, **caractérisé en ce que** l'article en céramique se transforme sur une épaisseur comprise entre 10 et 1000 nm, la couche de l'article en céramique la plus extérieure correspondant à du carbure ou du nitrure de zirconium sur une épaisseur de l'ordre de 20 à 200 nm.

19. Procédé de dépôt d'une couche décorative et/ou fonctionnelle selon l'une des revendications 1 à 18, **caractérisé en ce que** l'article est réalisé en zircone ZrO₂, en alumine Al₂O₃ ou en silice SiO₃.

20. Procédé de dépôt d'une couche décorative et/ou fonctionnelle selon la revendication 19, **caractérisé en ce que** la zircone est en phase tétragonale t-ZrO₂.

21. Procédé de dépôt d'une couche décorative et/ou fonctionnelle selon la revendication 20, **caractérisé en ce que** la phase tétragonale t-ZrO₂ est stabilisée à température ambiante par ajout de 3% molaire d'oxyde d'yttrium Y₂O₃.

22. Procédé de dépôt d'une couche décorative et/ou fonctionnelle selon l'une des revendications 1 à 21, **caractérisé en ce que** le matériau métallique pour l'étape de croissance galvanique est choisi dans le groupe formé par l'or, l'argent, le cuivre, le platine, l'indium, le palladium, le rhodium, les bronzes blanc et jaune, le nickel ainsi que les alliages de ces métaux.

23. Procédé de dépôt d'une couche décorative et/ou fonctionnelle selon l'une des revendications 1 à 22, **caractérisé en ce que** la résistance électrique de surface de l'article après traitement de carburation ou de nitruration est inférieure à 10 Ω/□.

24. Article en matériau céramique initialement non-conducteur de l'électricité pour pièce d'horlogerie ou de bijouterie traité conformément au procédé selon l'une quelconque des revendications 1 à 23.

25. Article selon la revendication 24, **caractérisé en ce qu'**il s'agit d'une carrure de montre, d'une lunette de montre, d'un cadran de montre, de maillons d'un bracelet, d'un pont, d'une platine ou d'une masse oscillante d'un mouvement horloger, d'une bague ou de boucles d'oreille.
